# FASCICULE DE BREVET EUROPEEN

(11) **EP 0 893 279 B1**
(45) Date de publication et mention de la délivrance du brevet: **31.10.2001**
(21) Numéro de dépôt: 98401467.0
(22) Date de dépôt: 16.06.1998
(51) Int. Cl.: B60B 17/00

(54) **Roue élastique, en particulier pour un véhicule ferroviaire urbain, et partie élastique de ladite roue formant dispositif d'amortissement**
Elastisches Rad, insbesondere für ein Schienenstadtfahrzeug, und ein als Dämpfungseinrichtung wirkendes Teil dieses Rades
Elastic wheel, in particular for urban railway vehicle, and elastic part of said wheel functioning as damping device

(30) Priorité: 22.07.1997 FR 9709260
(43) Date de publication de la demande: 27.01.1999
(73) Titulaire: HUTCHINSON, 75008 Paris (FR)
(72) Inventeur: Beaubatie, Laurent, 94700 Maisons Alfort (FR)
(74) Mandataire: Doireau, Marc

(56) Documents cités:
- EP-A- 0 745 493
- EP-A- 0 749 852
- FR-A- 1 126 819
- FR-A- 2 150 532
- GB-A- 2 153 308

## Description

La présente invention concerne une roue élastique, en particulier pour un véhicule ferroviaire urbain.

Une liaison élastique montée entre le bandage et le moyeu d'une roue d'un véhicule ferroviaire, est notamment décrite dans le Brevet français n° 1 126 819 qui est tombé dans le domaine public. Cette liaison élastique est constituée par deux anneaux semblables en caoutchouc. Chaque anneau a globalement une forme en tronc de cône et comporte également un flanc métallique fixé sur chacune des parois tronconiques interne et externe de l'anneau.

La liaison élastique est montée entre des brides respectivement solidaires du bandage et du moyeu de la roue, de manière à ce que les deux anneaux :
- soient situés dans deux plans perpendiculaires à l'axe de la roue, et
- soient symétriques l'un de l'autre par rapport au plan médian équidistant et parallèle aux deux plans perpendiculaires précités.

Une telle liaison élastique peut subir des efforts combinés de cisaillement et de compression, et forme un dispositif d'amortissement des bruits et des vibrations engendrés par le contact fer-fer entre le bandage de la roue et la surface de roulement du rail.

Le but de l'invention est de perfectionner une telle liaison élastique pour obtenir notamment une souplesse plus importante, ainsi qu'une meilleure atténuation des bruits et des vibrations.

A cet effet, l'invention propose une roue élastique, en particulier pour un véhicule ferroviaire urbain, ladite roue comprenant un bandage, un centre constitué d'un moyeu entouré d'un voile, et une liaison élastique montée entre le bandage et le voile de la roue, ladite liaison élastique comprenant deux anneaux semblables en un matériau élastomère et ayant chacun une forme en tronc de cône, les deux anneaux étant montés perpendiculairement à l'axe de la roue et disposés symétriquement par rapport à un plan médian perpendiculaire à l'axe de la roue, cette roue élastique étant caractérisée en ce que des renforts métalliques sont noyés dans chaque anneau et disposés au voisinage des parois tronconiques interne et externe de l'anneau, et en ce que chaque anneau comporte des pions anti-glissement en saillie sur chacune des parois tronconiques interne et externe de l'anneau.

Avantageusement, les pions anti-glissement sont venus de moulage avec les anneaux.

Selon un mode préférentiel de réalisation de l'invention, les renforts métalliques sont constitués par deux plaques annulaires épousant la forme tronconique de chaque anneau, et chaque plaque annulaire de renfort présente un crevé au droit de chaque pion anti-glissement, la paroi périphérique du crevé s'étendant à l'intérieur du pion correspondant, ces pions étant destinés à s'engager dans des encoches ménagées dans des moyens de support des anneaux qui sont respectivement solidaires du bandage et du voile de la roue.

Selon un mode de réalisation de l'invention, les moyens de support des anneaux comprennent deux brides latérales solidaires du voile de la roue et qui délimitent entre elles un espace annulaire en U ouvert en direction du bandage, et une partie mâle annulaire en saillie à la surface périphérique interne du bandage de la roue et qui fait saillie à l'intérieur dudit espace pour partager celui-ci en deux logements ayant une forme complémentaire à celle des anneaux.

Selon ce mode de réalisation, la partie mâle annulaire du bandage a une section droite de forme triangulaire, les deux parois inclinées de cette partie mâle comprenant des encoches pour recevoir les pions en saillie sur la paroi tronconique externe des anneaux, et les deux parois inclinées des deux brides qui sont en regard des parois inclinées de la partie mâle du bandage comprennent également des encoches de réception des pions en saillie sur la paroi tronconique interne des anneaux.

L'invention concerne également la partie élastique formant dispositif d'amortissement pour une roue d'une véhicule ferroviaire, cette partie élastique montée entre le bandage et le centre de la roue, étant constituée par deux anneaux semblables en un matériau élastomère, chaque anneau ayant au moins les caractéristiques énoncées précédemment.

Selon un avantage important de l'invention, le fait que les armatures métalliques soient noyées à l'intérieur de chaque anneau permet notamment d'améliorer le coefficient de frottement entre chaque anneau et la roue, d'assurer une protection anti-corrosion des armatures de renforcement, et de rattraper les jeux et les dispersions de planéité.

D'une manière générale, une roue élastique selon l'invention présente une raideur verticale qui peut être inférieure à 50 KN/mm, en particulier de l'ordre de 11 KN/mm, une raideur transversale au boudin de roue qui est supérieure à la raideur verticale, une flèche statique de l'ordre de quelques millimètres, en particulier de l'ordre de 4,5 mm, et une course disponible en vertical qui est de l'ordre du centimètre.

Toutes ces caractéristiques sont notamment obtenues par le fait que les deux anneaux sont disposés dans un espace annulaire où les deux faces d'extrémité de chaque anneau ne sont en contact avec aucun élément.

D'autres avantages, caractéristiques et détails de l'invention ressortiront de la description explicative qui va suivre en référence aux dessins annexés, donnés à titre d'exemple et qui représentent deux demi-vues A et B en coupe axiale d'une roue élastique selon l'invention.

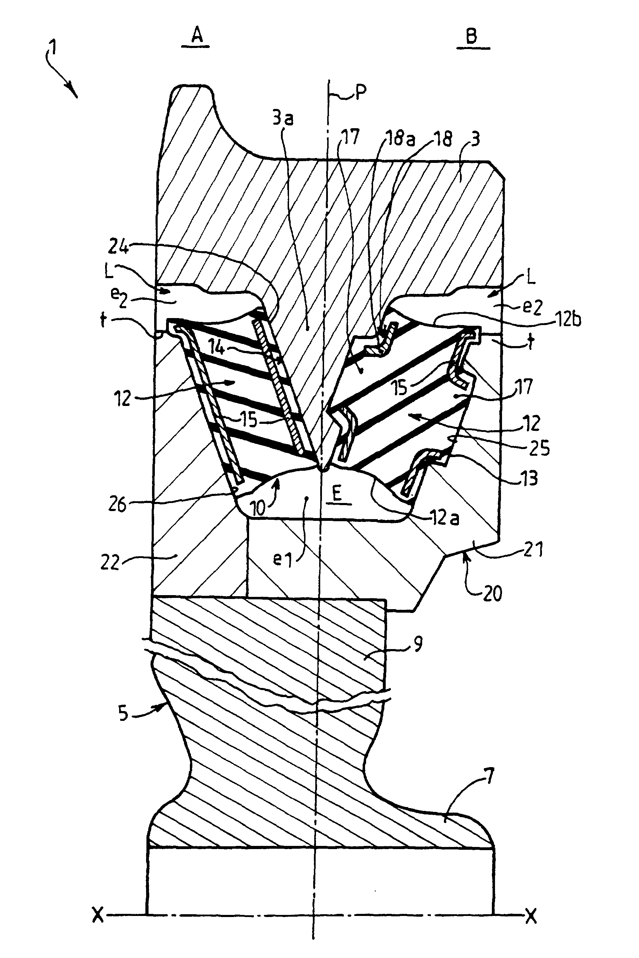

La roue élastique 1 illustrée sur le dessin comprend, d'une façon connue en soi, un bandage métallique 3, un centre 5 constitué d'un moyeu 7 entouré d'un voile 9, et une partie élastique 10 formant dispositif d'amortissement qui est montée entre le bandage 3 et le voile 9.

La partie élastique 10 comprend deux anneaux semblables 12 en un matériau élastomère et ayant chacun une forme en tronc de cône avec une paroi tronconique interne 13 et une paroi tronconique externe 14.

Des renforts métalliques sont noyés dans chaque anneau 12 et sont situés au voisinage des parois tronconiques interne 13 et externe 14. Ces renforts sont constitués par deux plaques métalliques annulaires 15 qui épousent sensiblement la forme des parois tronconiques 13 et 14.

Des pions anti-glissement 17 sont prévus en saillie sur chacune des parois tronconiques interne 13 et externe 14 de chaque anneau 12.

Chaque plaque annulaire de renfort 15 présente un crevé 18 au droit de chaque pion 17, la paroi périphérique 18a de chaque crevé s'étendant à l'intérieur du pion 17 correspondant. Les pions anti-glissement 17 sont destinés à pénétrer dans des encoches prévues dans des moyens de support 20 des anneaux 12 qui sont respectivement solidaires du bandage 3 et du voile 9 de la roue 1.

Selon un mode de réalisation, les moyens de support 20 comprennent deux brides latérales 21 et 22 solidaires du voile 9 de la roue et qui délimitent entre elles un espace annulaire E en forme de U ouvert en direction du bandage 3, et une partie mâle annulaire 3a en saillie à la surface périphérique interne du bandage 3 et qui fait saillie à l'intérieur dudit espace E pour partager celui-ci en deux logements L ayant une forme complémentaire de celle des anneaux 12.

La partie mâle 3a du bandage 3 a une section droite de forme triangulaire, ce qui permet de définir deux parois annulaires inclinées 24 dans chacune desquelles sont ménagées des encoches 25 pour recevoir les pions anti-glissement 17 prévues sur la paroi tronconique externe 14 des anneaux 12.

Les deux brides 21 et 22 présentent deux parois annulaires inclinées 26 faisant respectivement face aux deux parois inclinées 24 de la partie mâle 3a. Ces deux parois 26 sont sensiblement parallèles aux deux parois 24 de la partie mâle 3a, et comprennent également des encoches 25 pour recevoir les pions en saillie à la paroi tronconique interne 13 des deux anneaux 12.

Lorsque les deux anneaux 12 sont montés dans leurs logements respectifs L, les plans des deux anneaux 12 sont perpendiculaires à l'axe X-X de la roue 1 et disposés symétriquement par rapport à un plan médian P perpendiculaire à l'axe de la roue et passant par l'axe de symétrie de la partie mâle 3a du bandage 3. Lors du montage, les deux anneaux 12 sont précomprimés, de manière à ce qu'ils ne se décollent pas de leurs surfaces d'appui respectives.

Il est important de noter que les deux faces d'extrémité interne 12a et externe 12b de chaque anneau 12 ne sont en contact avec aucun élément de la roue 1, c'est-à-dire que les deux anneaux 12 ne comblent pas tout l'espace E délimité par les brides 21 et 22. En effet, un espace libre annulaire e1 est maintenu entre les faces d'extrémité interne 12a des deux anneaux 12 et le fond de l'espace E, et deux espaces libres annulaires e2 sont maintenus entre les faces d'extrémité externe 12b et la paroi interne du bandage 3, ces deux espaces e2 débouchant à l'extérieur.

D'une manière avantageuse, un talon t est ménagé dans au moins l'une des deux brides 21 et 22 à l'entrée de l'espace libre e2. Un tel talon t est utilisé pour bloquer la roue 1 et la maintenir concentrique au moyen d'un outillage approprié, lors des opérations de meulage et de rectification de la table de roulement qui est définie par la surface périphérique externe du bandage 3.

## Revendications

1. Roue élastique, en particulier pour un véhicule ferroviaire urbain, ladite roue comprenant un bandage (3), un centre (5) constitué d'un moyeu (7) entouré d'un voile (9), et une liaison élastique (10) montée entre le bandage (3) et le voile (9) de la roue (1), ladite liaison élastique (10) comprenant deux anneaux semblables (12) en un matériau élastomère et ayant chacun une forme en tronc de cône, les deux anneaux (12) étant montés perpendiculairement à l'axe (X-X) de la roue (1) et disposés symétriquement par rapport à un plan médian (P) perpendiculaire à l'axe (X-X) de la roue, **caractérisée en ce que** des renforts métalliques (15) sont noyés dans chaque anneau (12) et disposés au voisinage des parois tronconiques interne (13) et externe (14) de l'anneau (12), et **en ce que** chaque anneau (12) comporte des pions anti-glissement (17) en saillie sur chacune des parois tronconiques interne (13) et externe (14) de l'anneau (12).

2. Roue élastique selon la revendication 1, **caractérisée en ce que** les pions anti-glissement (17) sont venus de moulage avec les anneaux (12).

3. Roue élastique selon la revendication 1 ou 2, **caractérisée en ce que** les renforts métalliques (15) sont constitués par deux plaques annulaires épousant la forme tronconique de chaque anneau (12), et **en ce que** chaque plaque annulaire de renfort (15) présente un crevé (18) au droit de chaque pion anti-glissement (17), la paroi périphérique (18a) du crevé s'étendant à l'intérieur du pion correspondant (17).

4. Roue élastique selon l'une quelconque des revendications précédentes, **caractérisée en ce que** les pions anti-glissement (17) de chaque anneau (12) s'engagent dans des encoches (25) ménagées dans des moyens de support (20) des anneaux (12) qui sont respectivement solidaires du bandage (3) et du voile (9) de la roue.

5. Roue élastique selon la revendication 4, **caractérisée en ce que** les moyens de support (20) des anneaux comprennent deux brides latérales (21, 22) solidaires du voile (9) de la roue et qui délimitent un espace annulaire (E) en forme de U ouvert en direction du bandage (3), et une partie mâle annulaire (3a) en saillie à la surface périphérique interne du bandage (3) et qui s'engage à l'intérieur dudit espace (E) pour partager celui-ci en deux logements (L) ayant une forme complémentaire de celle des anneaux (12).

6. Roue élastique selon la revendication 5, **caractérisée en ce que** la partie mâle (3a) du bandage (3) a une section droite de forme triangulaire délimitant deux parois annulaires inclinées (24) comprenant les encoches (25) pour recevoir les pions anti-glissement (17) en saillie à la paroi tronconique externe (14) des anneaux (12), et **en ce que** les parois inclinées (26) des deux brides (21, 22) en regard des parois inclinées (24) de la partie mâle (3a) comprennent les encoches (25) de réception des pions anti-glissement (17) en saillie à la paroi tronconique interne (13) des anneaux (12).

7. Partie élastique formant dispositif d'amortissement pour une roue d'un véhicule ferroviaire, montée entre le bandage (3) et le centre (5) de la roue, comprenant un anneau (12) en un matériau élastomère ayant une forme en tronc de cône, **caractérisée en ce qu'**elle comprend en plus des armatures de renfort (15) noyés dans chaque anneau et situés au voisinage des parois tronconiques interne (13) et externe (14) de l'anneau, et des pions anti-glissement (17) en saillie sur chacune des deux parois tronconiques (13, 14) de l'anneau.

## Patentansprüche

1. Elastisches Rad, insbesondere für ein städtisches Schienenfahrzeug, wobei das Rad aufweist: eine Bandage bzw. einen Radreifen (3), einen Radkörper (5), der aus einer von einer Radschüssel (9) umgebenen Nabe (7) besteht, und eine zwischen dem Radreifen (3) und der Radschüssel (9) des Rades (1) angebrachte elastische Verbindung (10), wobei die elastische Verbindung (10) zwei ähnliche Ringe (12) aus einem Elastomer aufweist, die jeweils eine Kegelstumpfform besitzen, und die beiden Ringe (12) senkrecht zur Achse (X-X) des Rades (1) angebracht und symmetrisch zu einer zur Achse (X-X) des Rades senkrechten Mittelebene (P) angeordnet sind, **dadurch gekennzeichnet, daß** metallische Verstärkungen (15) in jeden Ring (12) eingebettet und benachbart zu der kegelstumpfförmigen Innenwand (13) bzw. Außenwand (14) des Rings (12) angeordnet sind, sowie dadurch, daß jeder Ring (12) auf der kegelstumpfförmigen Innenwand (13) bzw. Außenwand (14) vorstehende, verschiebungsverhindernde Vorsprünge (17) aufweist.

2. Elastisches Rad nach Anspruch 1, **dadurch gekennzeichnet, daß** die verschiebungsverhindernden Vorsprünge (17) durch Formen in einem Stück mit den Ringen (12) hergestellt sind.

3. Elastisches Rad nach Anspruch 1 oder 2, **dadurch gekennzeichnet, daß** die metallischen Verstärkungen (15) aus zwei ringförmigen Platten bestehen, die an die Kegelstumpfform eines jeden Ringes (12) angepaßt sind, sowie dadurch, daß jede ringförmige Verstärkungsplatte (15) mit einem jeden verschiebungsverhindernden Vorsprung (17) örtlich zusammenfallend einen umlaufenden Kragen (18) aufweist, wobei sich die Umfangswand (18a) des umlaufenden Kragens in das Innere des entsprechenden Vorsprungs (17) erstreckt.

4. Elastisches Rad nach einem der vorhergehenden Ansprüche, **dadurch gekennzeichnet, daß** sich die verschiebungsverhindernden Vorsprünge (17) eines jeden Ringes (12) in Vertiefungen (25) einfügen, die in jeweils einstückig mit dem Radreifen (3) und der Radschüssel (9) des Rades ausgebildeten Einrichtungen (20) zum Tragen der Ringe (12) vorgesehen sind.

5. Elastisches Rad nach Anspruch 4, **dadurch gekennzeichnet, daß** die Einrichtungen (20) zum Tragen der Ringe zwei seitliche Ringflansche (21, 22) aufweisen, die einstückig mit der Radschüssel (9) des Rades ausgebildet sind und einen Ringraum (E) mit in Richtung auf den Radreifen (3) hin offener U-Form begrenzen, sowie ein männliches Ringteil (3a), das auf der Innenumfangsfläche des Radreifens (3) vorsteht und in das Innere des Raumes (E) eingreift, um diesen in zwei Aufnahmen (L) mit einer zur Form der Ringe (12) komplementären Form zu teilen.

6. Elastisches Rad nach Anspruch 5, **dadurch gekennzeichnet, daß** das männliche Teil (3a) des Radreifens (3) einen dreiecksförmigen Querschnitt aufweist, der zwei geneigte Ringwände (24) begrenzt, welche die Vertiefungen (25) zum Aufnehmen der auf der kegelstumpfförmigen Außenwand (14) der Ringe (12) vorstehenden, verschiebungsverhindernden Vorsprünge (17) aufweisen, sowie dadurch, daß die den geneigten Wänden (24) des männlichen Teils (3a) gegenüberliegenden, geneigten Wände (26) der beiden Ringflansche (21, 22) die Vertiefungen (25) zum Aufnehmen der auf der kegelstumpfförmigen Innenwand (13) der Ringe (12) vorstehenden, verschiebungsverhindernden Vorsprünge (17) aufweisen.

7. Elastisches Teil, das eine Dämpfungsvorrichtung für ein Rad eines Schienenfahrzeugs darstellt und zwischen dem Radreifen (3) und dem Radkörper (5) des Rades angebracht ist, mit einem kegelstumpfförmigen Ring (12) aus einem Elastomermaterial, **dadurch gekennzeichnet, daß** es des weiteren Verstärkungsarmierungen (15), die in jeden Ring eingebettet und benachbart zur kegelstumpfförmigen Innenwand (13) bzw. Außenwand (14) angeordnet sind, sowie auf jeder der beiden kegelstumpfförmigen Wände (13, 14) vorstehende, verschiebungsverhindernde Vorsprünge (17) aufweist.

## Claims

1. Elastic wheel, in particular for urban railway vehicles, said wheel comprising a tyre (3), a centre (5) formed by a hub (7) surrounded by a web (9), and an elastic connection (10) fitted between the tyre (3) and the web (9) of the wheel (1), said elastic connection (10) comprising two similar rings (12) made of an elastomeric material each in the shape of a frustum of a cone, the two rings (12) being mounted perpendicularly to the axis (X-X) of the wheel and being arranged symmetrically to a centre plane (P) perpendicular to the axis (X-X) of the wheel, **characterised in that** metal reinforcements are embedded in each ring (12) and are arranged close to the inner (13) and outer (14) frusto-conical¹ walls of the ring (12), and **in that** each ring (12) comprises anti-slip studs (17) projecting from each of the inner (13) and outer (14) frusto-conical walls of the ring (12).

2. Elastic wheel according to claim 1, **characterised in that** the anti-slip studs (17) are integrally moulded with the rings (12).

3. Elastic wheel according to claim 1 or 2, **characterised in that** the metal reinforcements (15) are formed by two annular plates which follow the frusto-conical shape of each ring (12) and **in that** each annular reinforcing plate (15) has a perforation (18) at right-angles to each anti-slip stud (17), the peripheral wall (18a) of the perforation extending into the corresponding stud (17).

4. Elastic wheel according to any of the foregoing claims, **characterised in that** the anti-slip studs (17) on each ring (12) engage in recesses (25) arranged in means of support (20) for the rings (12) which are secured to the tyre (3) and web (9) respectively of the wheel.

5. Elastic wheel according to claim 4, **characterised in that** the means of support (20) for the rings comprise two lateral flanges (21, 22) secured to the web (9) of the wheel which define a U-shaped annular space (E) opening towards the tyre (3), and an annular male part (3a) projecting from the inner peripheral surface of the tyre (3) which penetrates into said space (E) to divide it into two housings (L) whose shapes are complementary to that of the rings (12).

6. Elastic wheel according to claim 5, **characterised in that** the male part (3a) of the tyre (3) is triangular in cross-section and defines two inclined annular walls (24) containing the recesses (25) to take the anti-slip studs (17) projecting from the outer frusto-conical walls (14) of the rings, and **in that** the inclined walls (26) of the two flanges (21, 22) which face the inclined walls (24) of the male part (3a) contain the recesses (25) to take the anti-slip studs (17) projecting from the inner frusto-conical walls (13) of the rings (12).

7. Elastic part forming a damping device for a railway vehicle wheel, which is fitted between the tyre (3) and the centre (5) of the wheel and which comprises a ring (12) made of an elastomeric material in the shape of a frustum of a cone, **characterised in that** it further comprises strengthening reinforcements (15) embedded in each ring which are situated close to the inner (13) and outer (14) frusto-conical walls of the ring, and anti-slip studs (17) projecting from each of two frusto-conical walls of the ring.
